# EUROPÄISCHE PATENTSCHRIFT

(11) **EP 1 265 723 B1**
(45) Veröffentlichungstag und Bekanntmachung des Hinweises auf die Patenterteilung: **14.11.2012**
(21) Anmeldenummer: 01911518.7
(22) Anmeldetag: 24.01.2001
(51) Int. Cl.: B23D 77/00, B23D 77/02, B23B 29/03, B23C 5/10, B23C 5/18, B23C 5/20, B23C 5/26

(54) **MASCHINENREIBAHLE UND REIBKOPF FÜR EINE MASCHINENREIBAHLE**
MACHINE REAMER AND REAMING HEAD FOR A MACHINE REAMER
ALESOIR A MACHINE ET TETE POUR ALESOIR A MACHINE

(30) Priorität: 01.03.2000 DE 10009721
(43) Veröffentlichungstag der Anmeldung: 18.12.2002
(73) Patentinhaber: Komet Group GmbH, 74354 Besigheim (DE)
(72) Erfinder: ROTHENSTEIN, Achim, 70736 Fellbach (DE)
(74) Vertreter: Wolf, Eckhard
(86) Internationale Anmeldenummer: PCT/EP2001/000730
(87) Internationale Veröffentlichungsnummer: WO 2001/064381

(56) Entgegenhaltungen:
- US-A- 1 472 798
- US-A- 3 307 243
- US-A- 5 851 094

## Beschreibung

Die Erfindung betrifft eine Maschinenreibahle mit einem schaftartigen Grundkörper und einem stimseitig über den Grundkörper axial überstehenden Reibkopf, der als einstückige Wechselschneidplatte ausgebildet ist, die in einen stimseitigen Plattensitz des Grundkörpers selbstzentrierend einspannbar ist. Weiter betrifft die Erfindung einen Reibkopf für eine Maschinenreibahle.

Maschinenreibahlen dieser Art werden zur Feinbearbeitung zylindrischer Bohrungen mit dem Ziel hoher Maß- und Formgenauigkeit eingesetzt. Die Spanungsarbeit leisten die Hauptschneiden an der Stirnseite der konischen Anschnittpartie, während die Nebenschneiden in der axial anschließenden Führungspartie der Werkzeugführung dienen. Eine wichtige Eigenschaft der Maschinenreibahle ist die Koaxialität des Reibkopfes in Bezug auf die Drehachse. Bei sogenannten Monoblockreibahlen werden die Schneiden in einen Grundkörper direkt eingelötet. Bei Verschleiß müssen die Monoblockreibahlen einschließlich dem Grundkörper vollständig ausgetauscht werden. Der Einsatz mehrschneidiger Monoblockreibahlen auf Werkzeugmaschinen ist daher äußerst kostenintensiv. Um diesen Nachteil zu vermeiden und akzeptable Standzeiten zu erhalten, werden gegenwärtig verstärkt nachstellbare Reibahlen eingesetzt. Geringe Verstellwege begrenzen jedoch auch hier die erzielbaren Kostenvorteile.

Bei einem rotierenden, spanabtragenden Werkzeug der eingangs angegebenen Art ist es an sich bekannt (US-A-5,851,094), den als einstückige Wechselschneidplatte ausgebildeten Werkzeugkopf in einen stimseitigen Plattensitz des Grundkörpers mittels eines Spannmechanismus koaxial selbstzentrierend einzuspannen. Die Einspannung erfolgt dort über einen konischen Plattensitz, in welchen der Werkzeugkopf mit einem konusförmigen Ansatz eingreift. Die Einspannung erfolgt über einen asymmetrisch am Ansatz angreifenden Werkzeugspanner, der zugleich die Funktion einer Drehmitnahme ausübt.

Weiter ist es bei einem Fräswerkzeug bestehend aus einem Grundkörper, einer Schneidplatte und einer Befestigungsschraube an sich bekannt (US-A-5,607,263), dass die Schneidplatte einen Ansatz mit einer umfangsgeschlossenen Formschluss-Seitenfläche mit einer polygonförmigen Konvexkontur aufweist, während der Halter eine stirnseitige Ausnehmung mit einer zur polygonförmigen Konvexkontur des schneidplattenseitigen Ansatzes komplementären Konkavpolygon-Kontur aufweist. Der Ansatz steht dabei exakt rechtwinklig zur Stirnfläche der scheibenförmigen Schneidplatte.

Der Erfindung liegt die Aufgabe zugrunde, den Materialeinsatz und den Bauaufwand bei Maschinenreibahlen der eingangs angegebenen Art zu reduzieren und dennoch gute Bearbeitungsergebnisse zu erzielen.

Zur Lösung dieser Aufgabe werden die in den Patentansprüchen 1, 9, 11 und 26 bis 28 angegebenen Merkmale vorgeschlagen. Vorteilhafte Ausgestaltungen und Weiterbildungen der Erfindung ergeben sich aus den abhängigen Ansprüchen.

Der erfindungsgemäßen Lösung liegt der Gedanke zugrunde, dass der Reibkopf als einstückige Wechselschneidplatte ausgebildet ist, die in einen stirnseitigen, radial aufweitbaren Plattensitz des Grundkörpers spielfrei und koaxial selbstzentrierend einspannbar ist. Um dies zu erreichen, wird gemäß einer ersten Ausführungsvariante der Erfindung vorgeschlagen, dass die Wechselschneidplatte einen über eine rückwärtige Planfläche axial überstehenden Ansatz aufweist, der mindestens drei in vorzugsweise gleichen Winkelabständen voneinander angeordnete, sich zu einem achszentralen Pyramideristumpf ergänzende Keilflächen aufweist, und dass der Plattensitz mindestens drei in vorzugsweise gleichen Winkelabständen voneinander angeordnete, zu den Keilflächen des plattenseitigen Pyramidenstumpfs komplementäre Schrägflächen aufweist, die durch eine stimseitige Planfläche begrenzt sind, gegen die die rückwärtige Planfläche der Wechselschneidplatte im vorgespannten Zustand axial anschlägt. Mit diesen Maßnahmen wird eine spielfreie Drehmitnahme zwischen Grundkörper und Wechselschneidplatte gewährleistet.

Eine bevorzugte Ausgestaltung der Erfindung sieht vor, dass der Plattensitz mindestens drei in vorzugsweise gleichen Winkelabständen voneinander angeordnete, durch axial und/oder radial offene Trennspalte voneinander getrennte, je eine der Schrägflächen aufweisende Spannlaschen aufweist, deren Stirnflächen eine die stimseitige Planfläche bildende Ebene aufspannen. Die Spannlaschen sind zweckmäßig so dimensioniert, dass sie unter der Einwirkung der Vorspannung gegenüber der Grundkörperachse nach Art eines Biegebalkens elastisch aufspreizbar sind. Eine Verbesserung in dieser Hinsicht wird dadurch erzielt, dass der Grundkörper im Inneren des Plattensitzes mindestens drei in vorzugsweise gleichen Winkelabständen voneinander angeordnete, axial und/oder radial offene Dehnschlitze aufweist, wobei die Dehnschlitze zweckmäßig im Wurzelbereich der jeweiligen Spannlaschen angeordnet sind. Um eine Aufspreizung der Spannlaschen zu ermöglichen, ist es von Vorteil, wenn der Anstellwinkel der grundkörperseitigen Schrägflächen kleiner ist als derjenige der plattenseitigen Keilflächen. Alternativ dazu können die Anstellwinkel der grundkörperseitigen Schrägflächen und der plattenseitigen Keilflächen gleich gewählt werden. Um in diesem Fall eine Aufspreizung zu ermöglichen, müssen die grundkörperseitigen und plattenseitigen Planflächen in der Fügestellung der Verbindungspartner ohne Vorspannung einen definierten Abstand voneinander aufweisen. Der Anstellwinkel der Keilflächen und/oder der Schrägflächen gegenüber der Grundkörperachse beträgt zweckmäßig 5° bis 10°.

Eine zweite Ausführungsvariante der Erfindung sieht vor, dass der selbstzentrierende Plattensitz einen im Grundkörper angeordneten, nach außen hin durch eine stimseitige Planfläche begrenzten Innenkonus und einen zwischen Innenkonus und stimseitiger Planfläche angeordneten Innenmehrkant aufweist, während der Reibkopf einen rückwärtig koaxial überstehenden, durch eine ringförmige Planfläche begrenzten und in den Innenkonus einsteckbaren Außenkonus sowie einen zwischen Außenkonus und ringförmiger Planfläche eingeformten, zum Innenmehrkant komplementären Außenmehrkant aufweist. Auch in diesem Fall schlägt der Reibkopf im vorgespannten Zustand mit seiner ringförmigen Planfläche gegen die stimseitige Planfläche des Grundkörpers an. Eine bevorzugte Ausgestaltung dieser Erfindungsvariante sieht vor, dass mindestens zwei in vorzugsweise gleichen Winkelabständen voneinander angeordnete, durch im Bereich der Innenmehrkantecken angeordnete, axial und/oder radial offene Trennspalte voneinander getrennte Spannlaschen vorgesehen sind, deren Stirnflächen gemeinsam eine die stimseitige Planfläche bildende Ebene begrenzen und die unter der Einwirkung der Vorspannung gegenüber der Grundkörperachse elastisch aufspreizbar sind.

Eine dritte Ausführungsvariante der Erfindung sieht vor, dass der selbstzentrierende Ptattensitz einen im Grundkörper angeordneten, nach außen hin durch eine stimseitige Planfläche begrenzten Passungszylinder und einen zwischen Passungszylinder und stimseitiger Planfläche angeordneten Innenmehrkant aufweist, während der Reibkopf einen rückwärtig koaxial überstehenden, durch eine ringförmige Planfläche begrenzten und in den Passungszylinder einsteckbaren, gegenüber dem Passzylinder überdimensionierten zylindrischen Passzapfen sowie eine zwischen Passzapfen und ringförmiger Planfläche eingeformten, zum Innenmehrkant komplementären Außenmehrkant aufweist. Auch in diesem Fall schlägt der Reibkopf mit seiner ringförmigen Planfläche im verspannten Zustand gegen die stimseitige Planfläche des Grundkörpers axial an. Vorteilhafterweise ist im Plattensitz zwischen dem Passungszylinder und dem Innenmehrkant ein in den Passungszylinder mündender Einführkonus angeordnet. Aus dem gleichen Grund kann der Reibkopf einen in der Nähe des stimseitigen Endes seines Passzapfens angeordneten Einführkonus aufweisen.

Eine bevorzugte Ausgestaltung der Erfindung sieht vor, dass der selbstzentrierende Plattensitz einen im Grundkörper angeordneten, nach außen durch eine stimseitige Planfläche begrenzten Innenkonus aufweist, während der Reibkopf einen rückwärtig koaxial überstehenden, durch eine ringförmige Planfläche begrenzten und in den Innenkonus einsteckbaren Außenkonus aufweist. Weiter weist der Plattensitz in diesem Falle mindestens zwei in vorzugsweise gleichen Winkelabständen voneinander angeordnete, durch axial und/oder radial offene Trennspalte voneinander getrennte Spannlaschen auf, deren Stirnflächen gemeinsam eine die stimseitige Planfläche bildende Ebene begrenzen. Damit ist es möglich, dass der Reibkopf mit seiner ringförmigen Planfläche in verspanntem Zustand gegen die stimseitige Planfläche des Grundkörpers anliegt und dass die Spannlaschen unter der Einwirkung der Vorspannung gegenüber der Grundkörperachse elastisch aufgespreizt werden.

Vorteilhafterweise ist die Wechselschneidplatte mittels einer achszentralen Kopfschraube stimseitig in den Plattensitz einspannbar. Alternativ dazu kann die Wechselschneidplatte mittels eines durch den Grundkörper achszentral hindurchgreifenden Zugankers im Plattensitz eingespannt werden. Der Zuganker kann dabei mit einer Zentralbohrung für den Durchtritt eines Kühlschmierstoffes versehen sein.

Eine bevorzugte Ausgestaltung der Erfindung sieht vor, dass die Wechselschneidplatte aus einem harten, vorzugsweise gesinterten Schneidstoff, besteht. Vorteilhafte Schneidstoffe sind hierbei HSS (Hochleistungsschnellschnittstahl), Hartmetall, CBN (kubisches Bomitrit), PKD (polykristalliner Diamant) oder Keramik. Die Wechselschneidplatte trägt gegebenenfalls eine reibungsmindemde Beschichtung. Um mit größerem Vorschub arbeiten zu können, sind die Wendeschneidplatten zweckmäßig mehrschneidig ausgebildet, wobei zur Verbesserung des Arbeitsergebnisses eine ungleiche Zahnteilung vorgesehen ist.

Mit den erfindungsgemäßen Maßnahmen kommt man mit relativ kleinen Wechselschneidplatten aus, deren Führungspartie zweckmäßig kürzer als der halbe Plattendurchmesser gewählt wird.

Ein wesentlicher Vorteil der Erfindung besteht darin, dass im Verschleißfalle nur der Reibkopf ausgewechselt werden muß. Der relativ aufwendige Grundkörper bleibt erhalten. Die erfindungsgemäßen Maßnahmen sorgen dafür, dass die Koaxialität der Wechselschneidplatte gewährleistet ist. Maßgeblich hierfür ist die selbstzentrierende Schräganlage und die Planflächenanlage der Wechselschneidplatte im Plattensitz.

Im Folgenden wird die Erfindung anhand der in der Zeichnung in schematischer Weise dargestellten Ausführungsbeispiele näher erläutert. Es zeigen
- Fig. 1a: eine schaubildliche Darstellung einer Maschinenreibahle mit Wechselschneidplatte;
- Fig.: 1 b eine schaubildliche Stirnseitenansicht der Maschinenreibahle nach Fig. 1a;
- Fig. 2: eine schaubildliche Darstellung des Grundkörpers der Maschinenreibahle;
- Fig. 3a: einen Längsschnitt durch den Grundkörper nach Fig. 2;
- Fig. 3b: eine Stirnseitenansicht des Grundkörpers nach Fig. 2;
- Fig. 4a: und b eine schaubildliche Darstellung und eine Draufsicht des als Wechselschneidplatte ausgebildeten Reibkopfs;
- Fig. 5a: und b zwei Schnitte entlang den Schnittlinien A-A und B-B der Fig. 4b;
- Fig. 6a: bis c den Spannstift der Maschinenreibahle nach Fig. 1a und b in schaubildlicher Darstellung, in Seitenansicht und im Längsschnitt;
- Fig. 7a: bis c die Spannmutter der Maschinenreibahle nach Fig. 1a und b in schaubildlicher Darstellung, in Seitenansicht und in einem Längsschnitt;
- Fig. 8a: und b eine ausschnittsweise Schnittdarstellung und eine Draufsicht einer gegenüber Fig. 1 bis 7 abgewandelten Maschinenreibahle;
- Fig. 9a: und b ein Ausführungsbeispiel für die Erzeugung einer selbstzentrierenden Vorspannung innerhalb des Plattensitzes;
- Fig. 10a: und b ein gegenüber Fig. 9a und b abgewandeltes Ausführungsbeispiel für die Erzeugung einer selbstzentrierenden Vorspannung im Plattensitz;
- Fig. 11a bis: c drei weitere Ausführungsvarianten eines Grundkörpers der Maschinenreibahle in einer Darstellung entsprechend Fig. 2.

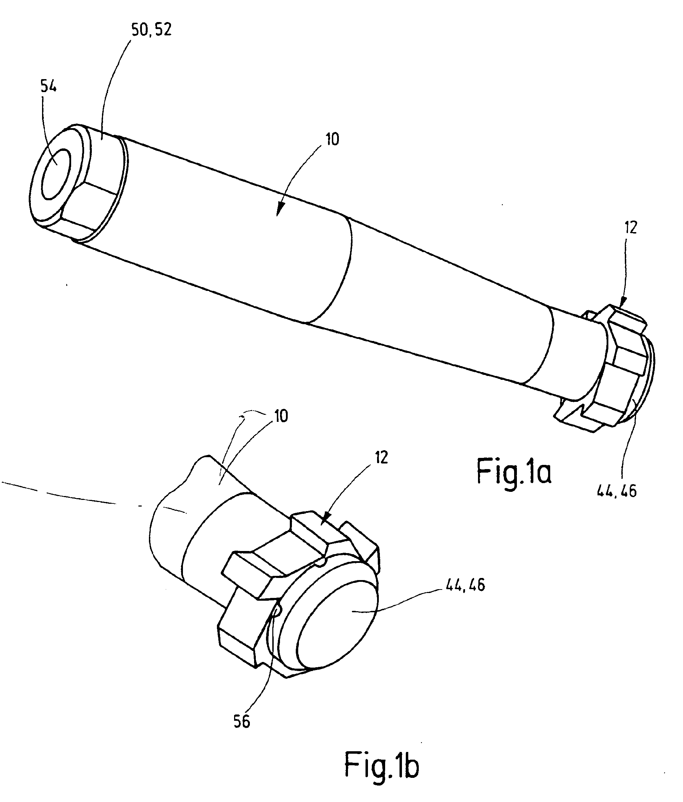

Die in der Zeichnung dargestellten Maschinenreibahlen weisen einen als Schaft ausgebildeten Grundkörper 10 und einen stimseitig über den Grundkörper axial überstehenden Reibkopf auf. Der Reibkopf ist als einstückige Wechselschneidplatte 12 ausgebildet, die in einen stimseitigen Plattensitz 14 des Grundkörpers 10 unter axialer Vorspannung spielfrei und koaxial selbstzentrierend einspannbar ist. Die aus einem gesinterten Schneidstoff, insbesondere aus Hartmetall bestehende Wechselschneidplatte 12 weist mehrere in Umfangsrichtung im Abstand voneinander angeordnete Schneidzähne 16 auf, deren Zahnteilung ungleich ist. Die Schneidzähne 16 enthalten jeweils eine schräge Anschnittpartie 18, die beim Bearbeitungsvorgang die wesentliche Spanungsarbeit übernimmt. Der Anschnittwinkel beträgt bei den gezeigten Ausführungsbeispielen 45° bis 60°. An die Anschnittpartie 18 schließt sich axial nach hinten die Führungspartie 20 an, der vornehmlich eine Führungsfunktion innerhalb der zu bearbeitenden Bohrungen zukommt. Wie insbesondere aus den Fig. 1a. b und 4a zu ersehen ist, ist die Länge der Führungspartie 20 bei den gezeigten Ausführungsbeispielen auf ein Minimum reduziert. Die Führungspartie 20 ist an ihrem rückwärtigen Ende durch eine Planfläche 22 begrenzt. Weiter weist die Wechselschneidplatte 12 einen über die Planfläche 22 axial überstehenden Ansatz 24 auf, der drei in gleichen Winkelabständen voneinander angeordnete, sich zu einem axialen Pyramidenstumpf ergänzende Keilflächen 26 aufweist. Damit kann die Wechselschneidplatte im Plattensitz 14 spielfrei verankert werden.

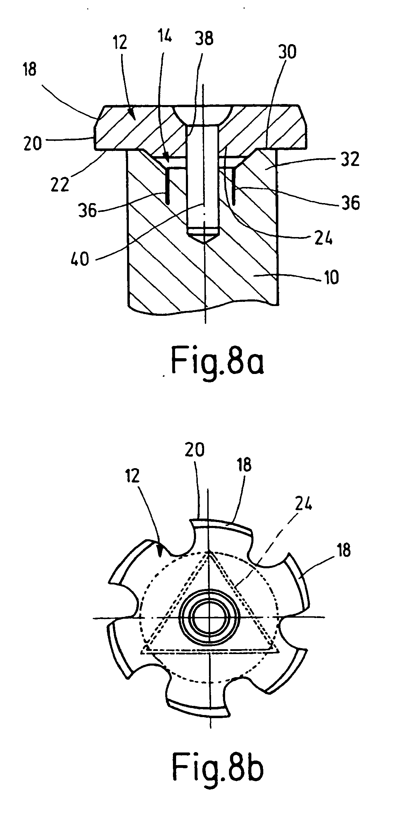

Zu diesem Zweck weist der Plattensitz 14 drei in gleichen Winkelabständen voneinander angeordnete, zu den Keilflächen 26 des plattenseitigen Pyramidenstumpfs komplementäre Schrägflächen 28 auf, die durch eine stimseitige Planfläche 30 begrenzt sind. Die Wechselschneidplatte 12 schlägt mit ihrer Planfläche 22 in vorgespanntem Zustand axial gegen die Planfläche 30 des Plattensitzes 14 an. Die Schrägflächen 28 sind an je einer den Plattensitz 14 bildenden Spannlasche 32 angeordnet, die durch axial offene Trennspalte 34 in gleichen Winkelabständen voneinander am Grundkörper 10 angeordnet sind. Die Stirnflächen der Spannlaschen 32 spannen gemeinsam eine die stimseitige Planfläche 30 bildende Ebene auf. Die Spannlaschen 32 sind so dimensioniert, dass sie beim Spannvorgang unter der Einwirkung der Vorspannung gegenüber der Grundkörperachse nach Art von Biegebalken elastisch aufspreizbar sind. Eine Verbesserung in dieser Hinsicht wird dadurch erzielt, dass der Grundkörper 10 im Inneren des Plattensitzes im Wurzelbereich der jeweiligen Spannlaschen 3 in gleichen Winkelabständen voneinander angeordnete, axial zur Stirnseite hin offene Dehnschlitze 36 aufweist (vgl. Fig. 8a). Die Wechselschneidplatte 12 weist zur Befestigung am Grundkörper 10 eine Axialbohrung 38 auf. Bei dem in Fig. 8a und b gezeigten Ausführungsbeispiel wird die Wechselschneidplatte 12 mittels einer Kopfschraube 40 stimseitig im Plattensitz eingespannt.

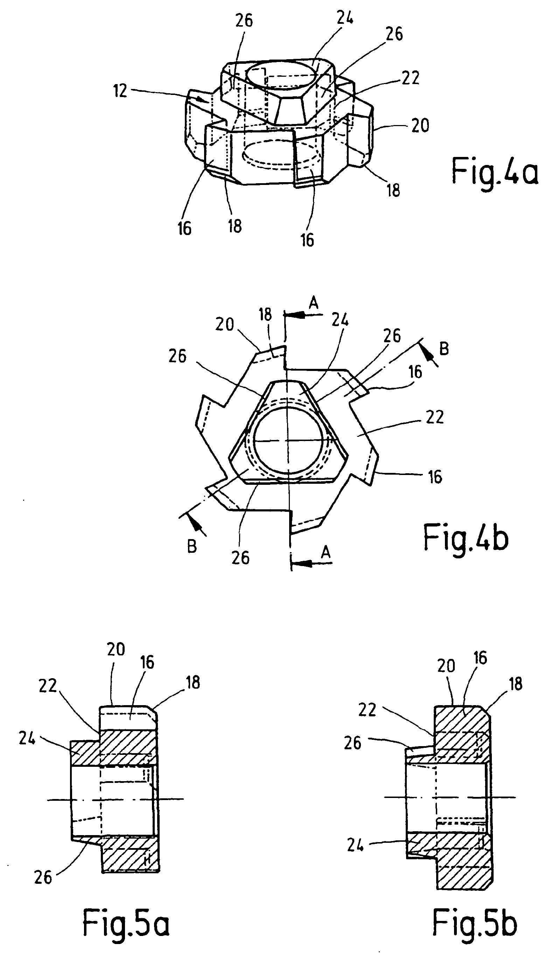

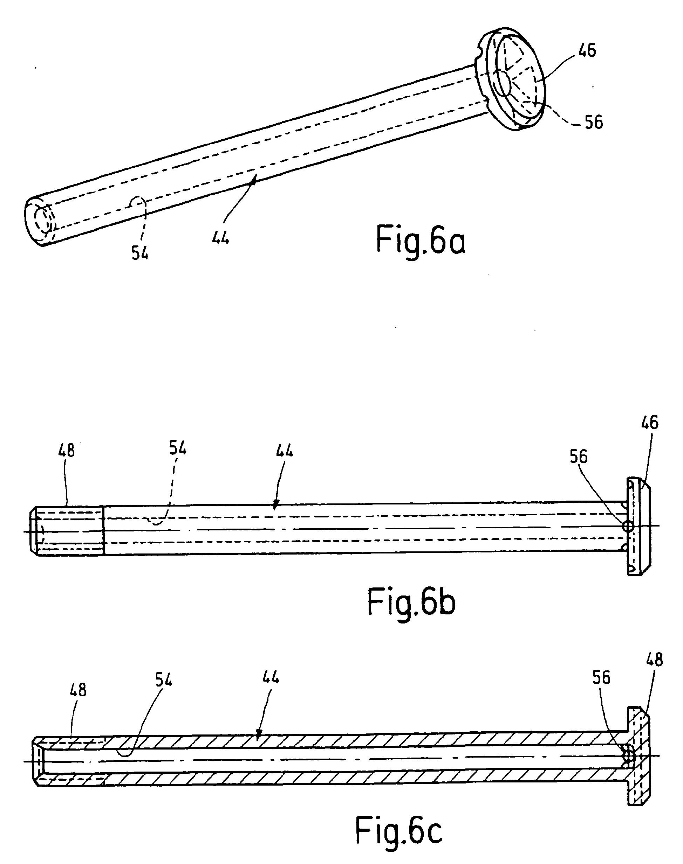

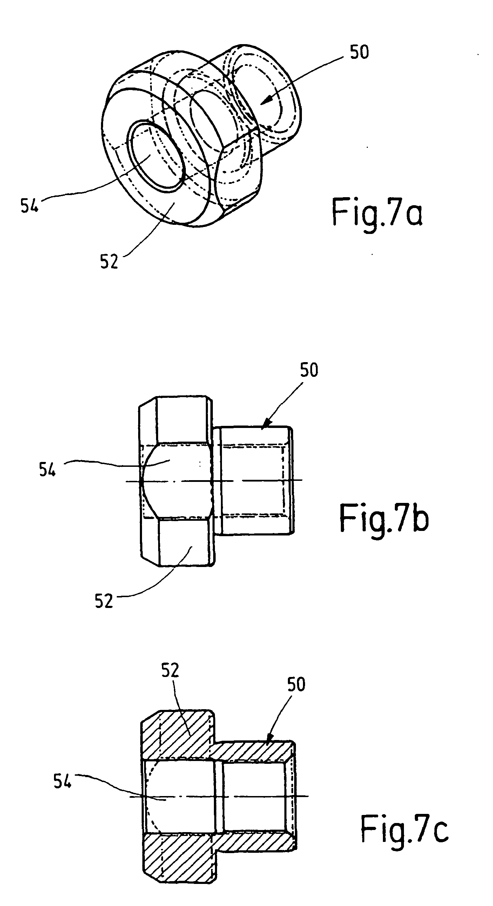

Bei dem Ausführungsbeispiel nach Fig. 1 bis 7 ist die Wechselschneidplatte 12 mittels eines durch eine Axialbohrung 42 des Grundkörpers 10 hindurchgreifenden Spannstifts 44 im Plattensitz 14 einspannbar. Der Spannstift 44 liegt dazu mit seinem Kopf 46 gegen die Stirnfläche der Wechselschneidplatte 12 an. An seinem dem Kopf 46 abgewandten Ende weist der Spannstift 44 ein Außengewinde 48 auf, auf das die in Fig. 7a bis c gezeigte Spannmutter 50 aufdrehbar ist. Die Verspannung erfolgt durch Anziehen des Kopfes 52 der Spannmutter 50 gegen das rückwärtige Ende des Grundkörpers 10 (Fig. 1a). Der Spannstift 44 und die Spannmutter 50 sind mit einer Axialbohrung 54 versehen, die im Bereich des Spannstiftkopfes 46 in Radialkanäle mündet. Über die Axialbohrung 54 und die Radialkanäle 56 erfolgt die Zufuhr eines Kühlschmiermittels zu den Schneiden 16.

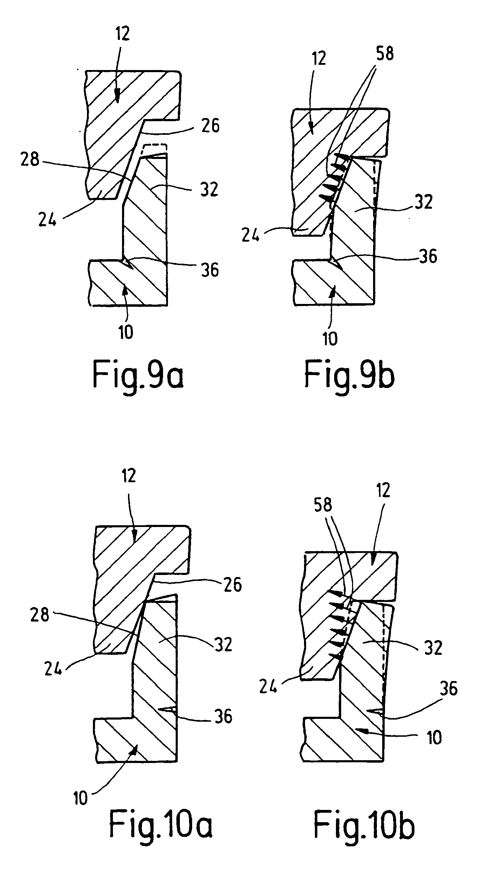

Das selbstzentrierende Fügen der Wechselschneidplatte 12 im Plattensitz 14 wird dadurch ermöglicht, dass die beiden Fügepartner vor dem Anschlag der beiden Planflächen 22 und 30 so vorspannungsfrei zur Anlage gebracht werden, dass im Zuge des weiteren Spannvorgangs eine elastische Aufspreizung der Spannlaschen 32 erfolgt. Dies ist einmal dadurch möglich, dass bei parallelen Keil- und Schrägflächen 26,28 die beiden Planflächen 22 und 30 im gefügten, aber unverspannten Zustand einen Abstand voneinander aufweisen (Fig. 9a). Der gleiche Zweck kann dadurch erzielt werden, dass der Anstellwinkel der grundkörperseitigen Schrägflächen 28 gegenüber der Grundkörperachse steiler ist als der Anstellwinkel der Keilflächen 26 (Fig. 10a). Bei entsprechender Dimensionierung der Verbindungspartner kommt es in beiden Fällen aufgrund der elastischen Ausbiegung der Spannlaschen 32 zu einer durch die Pfeile 58 angedeuteten Flächenpressung und Vorspannung und zugleich zu einer Anlage im Bereich der Planflächen 22,30. Um ein definiertes Aufspreizen zu gewährleisten, sind im Fußbereich der Spannlaschen 32 radial und/oder axial offene Dehnschlitze 36 eingeformt. Mit diesen Vorkehrungen wird ein hohes Maß an Koaxialität zwischen Wechselschneidplatte 12 und Grundkörper 10 erzielt.

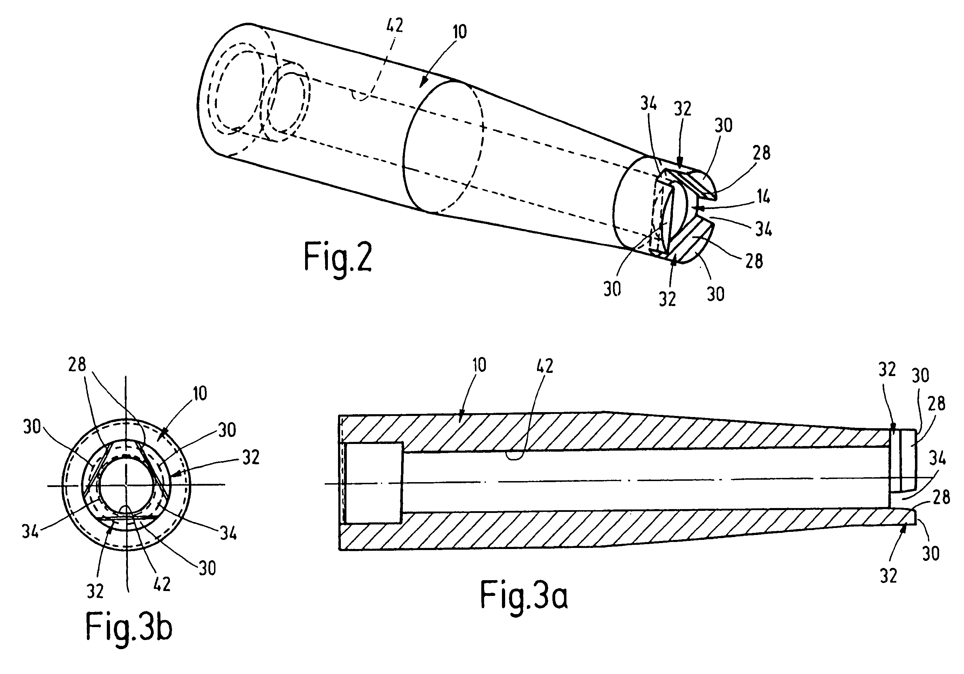

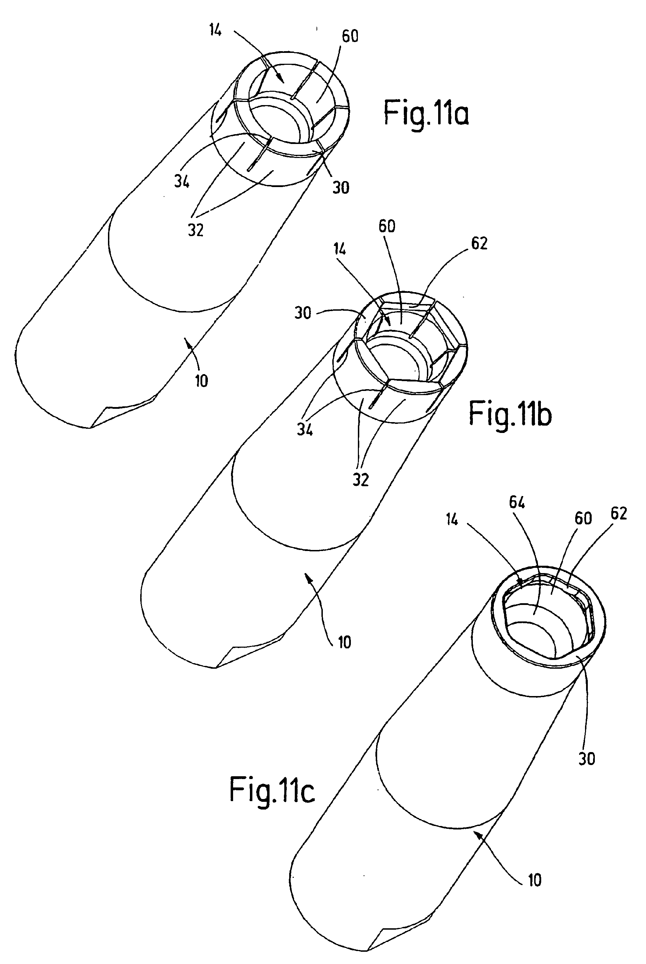

Die in den Fig. 11a bis c schaubildlich dargestellten Grundkörper unterscheiden sich von dem Ausführungsbeispiel nach Fig. 2 in der Ausgestaltung des stimseitigen Plattensitzes 14.

Der Plattensitz 14 nach Fig. 11a weist einen Innenkonus 60 auf, der nach außen hin durch die stimseitige Planfläche 30 begrenzt ist. Der Plattensitz ist dabei durch insgesamt sechs in gleichen Winkelabständen voneinander angeordnete, durch axial offene Trennspalte 34 voneinander getrennte Spannlaschen 32 gebildet, deren Stirnflächen gemeinsam eine die stimseitige Planfläche 30 bildende Ebene begrenzen. Wird in diesen Plattensitz ein Reibkopf mit einem koaxial überstehenden, durch eine ringförmige Planfläche begrenzten Außenkonus eingesetzt, werden die Spannlaschen 32 unter der Einwirkung einer Vorspannung gegenüber dem Grundkörper 10 elastisch aufgeweitet. Dabei kommt es zu einer Selbstzentrierung der Wechselschneidplatte 12 am Grundkörper 10.

Bei dem in Fig. 11b gezeigten Ausführungsbeispiel ist neben dem Innenkonus 60 zusätzlich ein Innensechskant 62 vorgesehen. Wenn in diesem Fall der Ansatz 24 der Wechselschneidplatte 12 einen zum Innensechskant 62 komplementären Außensechskant aufweist, kommt es zu einer spielfreien Drehmitnahme. Die Trennspalte 34, durch die die Spannlaschen 32 voneinander getrennt sind, sind in diesem Fall im Eckbereich des Innensechskants 62 angeordnet.

Bei dem in Fig. 11c gezeigten Ausführungsbeispiel ist neben dem Innenkonus 60 und dem Innensechskant 62 zusätzlich ein Passungszylinder 64 vorgesehen. Der Innenkonus 60 hat hier die Funktion eines Einführungskonus für den mit einem entsprechenden Passzylinder versehenen Ansatz der Wechselschneidplatte. Weiter fehlen hier die Trennspalte 34, so dass nur eine relativ kleine Radialaufweitung über den Innenkonus 60 und den Passungszylinder 64 beim Verspannen der Wechselschneidplatte erfolgen kann.

Eine hohe Wechselgenauigkeit wird dadurch erzielt, dass die Schleifbearbeitung aller Wechselschneidplatten auf ein- und demselben Meister-Grundkörper erfolgt.

Zusammenfassend ist folgendes festzuhalten: Die Erfindung bezieht sich auf eine Maschinenreibahle mit einem schaftartigen Grundkörper 10 und einem stimseitig über den Grundkörper axial überstehenden Reibkopf 12. Um trotz geringen Material- und Bauaufwands eine hohe Präzision in der Koaxialität zu erhalten, wird gemäß der Erfindung vorgeschlagen, dass der Reibkopf als einstückige Wendeschneidplatte 12 ausgebildet ist, die in einen stimseitigen Plattensitz 14 des Grundkörpers 10 koaxial selbstzentrierend einspannbar ist.

## Patentansprüche

1. Maschinenreibahle mit einem schaftartigen Grundkörper (10) und einem stirnseitig über den Grundkörper axial überstehenden Reibkopf, der als einstückige Wechselschneidplatte (12) ausgebildet ist, die in einen stimseitigen Plattensitz (14) des Grundkörpers selbstzentrierend einspannbar ist, **dadurch gekennzeichnet, dass** die Wechselschneidplatte (12) einen über eine rückwärtige Planfläche (22) axial überstehenden Ansatz (24) aufweist, der mindestens drei in vorzugsweise gleichen Winkelabständen voneinander angeordnete, sich zu einem achszentralen Pyramidenstumpf ergänzende Keilflächen (26) aufweist, und dass der Plattensitz. (14) mindestens drei in vorzugsweise gleichen Winkelabständen voneinander angeordnete, zu den Keilflächen (26) des plattenseitigen Pyramidenstumpfs komplementäre Schrägflächen (28) aufweist, die durch eine stimseitige Planfläche (30) begrenzt sind, gegen die die rückwärtige Planfläche (22) der Wechselschneidplatte (12) in vorgespanntem Zustand axial anschlägt.

2. Maschinenreibahle nach Anspruch 1, **dadurch gekennzeichnet, dass** der Plattensitz (14) mindestens drei in vorzugsweise gleichen Winkelabständen voneinander angeordnete, durch axial und/oder radial offene Trennspalte (34) voneinander getrennte, je eine der Schrägflächen (28) aufweisende Spannlaschen (32) aufweist, deren Stirnflächen gemeinsam eine die stimseitige Planfläche (30) bildende Ebene aufspannen.

3. Maschinenreibahle nach Anspruch 2, **dadurch gekennzeichnet, dass** die Spannlaschen (32) unter der Einwirkung der Vorspannung gegenüber der Grundkörperachse elastisch aufspreizbar sind.

4. Maschinenreibahle nach einem der Ansprüche 1 bis 3, **dadurch gekennzeichnet, dass** der Grundkörper (10) im Inneren des Plattensitzes (14) mindestens drei in vorzugsweise gleichen Winkelabständen voneinander angeordnete, axial und/oder radial zur Stirnseite hin offene Dehnschlitze (36) aufweist.

5. Maschinenreibahle nach Anspruch 4, **dadurch gekennzeichnet, dass** die Dehnschlitze (36) im Wurzelbereich der jeweiligen Spannlaschen (32) angeordnet sind.

6. Maschinenreibahle nach einem der Ansprüche 1 bis 5, **dadurch gekennzeichnet, dass** der Anstellwinkel der Keilflächen (26) gegenüber der Grundkörperachse 5° bis 10° beträgt.

7. Maschinenreibahle nach einem der Ansprüche 1 bis 6, **dadurch gekennzeichnet, dass** der Anstellwinkel der grundkörperseitigen Schrägflächen (28) kleiner ist als derjenige der plattenseitigen Keilflächen (26).

8. Maschinenreibahle nach einem der Ansprüche 1 bis 6, **dadurch gekennzeichnet, dass** die Anstellwinkel der grundkörperseitigen Schrägflächen (28) und der plattenseitigen Keilflächen (26) gleich sind und dass die grundkörperseitigen und plattenseitigen Planflächen (22,30) in der Fügestellung der Verbindungspartner ohne Vorspannung einen definierten Abstand voneinander aufweisen.

9. Maschinenreibahle mit einem schaftartigen Grundkörper (10) und einem stimseitig über den Grundkörper axial überstehenden Reibkopf, der als einstückige Wechselschneidplatte (12) ausgebildet ist, die in einen stimseitigen Plattensitz (14) des Grundkörpers selbstzentrierend einspannbar ist, **dadurch gekennzeichnet, dass** der selbstzentrierende Plattensitz (14) einen im Grundkörper angeordneten, nach außen hin durch eine stimseitige Planfläche (30) begrenzten Innenkonus (60) und einen zwischen Innenkonus und stimseitiger Planfläche (30) angeordneten Innenmehrkant (62) aufweist, dass die Wechselschneidplatte (12) einen rückwärtig koaxial überstehenden, durch eine ringförmige Planfläche begrenzten und in den Innenkonus (60) einsteckbaren Außenkonus sowie einen zwischen Außenkonus und rückwärtiger Planfläche eingeformten, zum Innenmehrkant (62) komplementären Außenmehrkant aufweist und dass die Wechselschneidplatte (12) mit ihrer ringförmigen Planfläche (22) im vorgespannten Zustand gegen die stimseitige Planfläche (30) des Grundkörpers (10) axial anschlägt.

10. Maschinenreibahle nach Anspruch 9, **dadurch gekennzeichnet, dass** der Plattensitz (14) mindestens zwei in vorzugsweise gleichen Winkelabständen voneinander angeordnete, durch im Eckbereich des Innenmehrkants (62) angeordnete, axial und/oder radial offene Trennspalte (34) voneinander getrennte Spannlaschen (32) aufweist, deren Stimflächen gemeinsam eine die stimseitige Planfläche (30) bildende Ebene begrenzen und die unter der Einwirkung der Vorspannung gegenüber der Grundkörperachse elastisch aufspreizbar sind.

11. Maschinenreibahle mit einem schaftartigen Grundkörper (10) und einem stimseitig über den Grundkörper axial überstehenden Reibkopf, der als einstückige Wechselschneidplatte (12) ausgebildet ist, die in einen stimseitigen Plattensitz (14) des Grundkörpers selbstzentrierend einspannbar ist, **dadurch gekennzeichnet, dass** der selbstzentrierende Plattensitz (14) einen im Grundkörper (10) angeordneten, nach außen hin durch eine stimseitige Planfläche (30) begrenzten Passungszylinder (64) und einen zwischen Passungszylinder (64) und stimseitiger Planfläche (30) angeordneten Innenmehrkant (32) aufweist, dass die Wechselschneidplatte (12) einen über eine rückwärtige Planfläche überstehenden, in den Passungszylinder (64) einsteckbaren, gegenüber dem Passzylinder überdimensionierten zylindrischen Passzapfen sowie einen zwischen Passzapfen und ringförmiger Planfläche eingeformten, zum Innenmehrkant (62) komplementären Außenmehrkant aufweist, und dass die Wechselschneidplatte (12) mit ihrer rückwärtigen Planfläche im vorgespannten Zustand gegen die stimseitige Planfläche (30) des Grundkörpers (10) axial anschlägt.

12. Maschinenreibahle nach Anspruch 11, **dadurch gekennzeichnet, dass** im Plattensitz (14) zwischen Passungszylinder (64) und Innenmehrkant (62) ein in den Passungszylinder mündender Einführkonus (60) angeordnet ist.

13. Maschinenreibahle nach Anspruch 11 oder 12, **dadurch gekennzeichnet, dass** die Wechselschneidplatte (12) einen in der Nähe des stimseitigen Endes ihres Passzapfens angeordneten Einführkonus aufweist.

14. Maschinenreibahle nach einem der Ansprüche 1 bis 13, **dadurch gekennzeichnet, dass** die Wechselschneidplatte (12) mehrere im Abstand voneinander angeordnete Schneidzähne (16) aufweist.

15. Maschinenreibahle nach Anspruch 14, **dadurch gekennzeichnet, dass** die mehrschneidige Wechselschneidplatte eine ungleiche Zahnteilung aufweist.

16. Maschinenreibahle nach einem der Ansprüche 1 bis 15, **dadurch gekennzeichnet, dass** die Wechselschneidplatte (12) mittels einer achszentralen Kopfschraube stimseitig in den Plattensitz (14) einspannbar ist.

17. Maschinenreibahle nach einem der Ansprüche 1 bis 15, **dadurch gekennzeichnet, dass** die Wechselschneidplatte (12) mittels eines durch den Grundkörper (10) achszentral hindurchgreifenden Spannstifts (44) im Plattensitz (14) einspannbar ist.

18. Maschinenreibahle nach Anspruch 17, **dadurch gekennzeichnet, dass** der Spannstift (44) eine mit einem Kühlxhmiermittel beaufschlagbare Axialbohrung (54) aufweist.

19. Maschinenreibahle nach einem der Ansprüche 1 bis 18, **dadurch gekennzeichnet, dass** die Wechselschneidplatte (12) aus einem harten, vorzugsweise gesinterten Schneidstoff besteht und gegebenenfalls reibungsmindemd beschichtet ist.

20. Maschinenreibahle nach Anspruch 19, **dadurch gekennzeichnet, dass** die Wechselschneidplatte (12) aus einem Schneidstoff der Gruppe HSS, Hartmetall, CBN, PKD und Keramik besteht.

21. Maschinenreibahle nach einem der Ansprüche 9 bis 20, **dadurch gekennzeichnet, dass** der Innenmehrkant als Innensechskant und der Außenmehrkant als Außensechskant ausgebildet ist.

22. Maschinenreibahle nach einem der Ansprüche 17 bis 21, **dadurch gekennzeichnet, dass** der Spannstift einen gegen eine Stirnfläche der Wechselschneidplatte (12) anliegenden Kopf (46) aufweist.

23. Maschinenreibahle nach Anspruch 22, **dadurch gekennzeichnet, dass** der Spannstift (44) an seinem dem Kopf (46) abgewandten Ende ein Außengewinde (48) aufweist, auf den eine gegen das rückwärtige Ende des Grundkörpers (10) anziehbare Spannmutter (50) aufdrehbar ist.

24. Maschinenreibahle nach einem der Ansprüche 18 bis 23, **dadurch gekennzeichnet, dass** die Axialbohrung (54) im Bereich des Spannstiftkopfes (46) in zu den Schneiden (16) führende Radialkanäle (56) mündet.

25. Maschinenreibahle, nach einem der Ansprüche 23 oder 24, **dadurch gekennzeichnet, dass** die Spannmutter (50) eine mit der Axialbohrung (54) des Spannstifts kommunizierende Axialbohrung (54) aufweist.

26. Reibkopf für eine Maschinenreibahle, der als einstückige Wechselschneidplatte (12) ausgebildet ist, dadurch gekennzeichet, dass die Wendeschneidplatte eiren über eine rückwärtige Planfläche (22) axial überstehenden Ansatz (24) aufweist, der mindestens drei in gleichen Winkelabständen voneinander angeordnete Keilflächen (26) aufweist, deren Ebenen sich zu einer achszentralen, vorzugsweise gleichseitigen Pyramide ergänzen.

27. Reibkopf für eine Maschinenreibahle, der als einstückige Wechselschneidplatte (12) ausgebildet ist, **dadurch gekenzeinet,** dass die Weinderschneidplatte einen über eine rückwärtige Planfläche (22) axial überstehenden Ansatz (24) aufweist, der einen Außenkonus und einen zwischen Außenkonus und Planfläche (22) angeordneten Außenmehrkant aufweist.

28. Reibkopf für eine Maschinenreibahle_{,} der als einstückige Wechselschneidplatte (12) ausgebildet ist, **dadirch gekennzeichnet,** dass die Wechselschneidplatte einen über eine rückwärtige Planfläche (22) axial überstehenden Ansatz (24) aufweist, der einen in die zylindrische Passungspartie übergehenden Einführkonus aufweist und der eine zylindrische Passungspartie und einen zwischen der Passungspartie und der Planfläche (22) angeordneten Außenmehrkant aufweist.

29. Reibkopf nach einem der Ansprüche 27 oder 28, **dadurch gekennzeichnet, dass** der Außenmehrkant als Außensechskant ausgebildet ist.

30. Reibkopf nach einem der Ansprüche 26 bis 29, **dadurch gekennzeichnet, dass** er aus einem harten, vorzugsweise gesinterten Schneidstoff besteht.

31. Reibkopf nach Anspruch 30, **dadurch gekennzeichnet, dass** die Wechselschneidplatte (12) aus einem Schneidstoff der Gruppe HSS, Hartmetall, CBN, PKD und Keramik besteht.

32. Reibkopf nach Anspruch 26 bis 31, **dadurch gekennzeichnet, dass** die Wechsetschneidptatte (12) mehrschneidig ist.

33. Reibkopf nach einem der Ansprüche 26 bis 32, **dadurch gekennzeichnet, dass** die Wechselschneidplatte einen an eine Anschnittpartie (18) axial anschließende, zylindrische, ballige oder konische Führungspartie (20) aufweist, die kürzer als der halbe Plattendurchmesser ist.

34. Reibkopf nach einem der Ansprüche 26 bis 33, **dadurch gekennzeichnet, dass** die Wechselschneidplatte eine zentrale Durchgangsbohrung (42) aufweist.

## Claims

1. Machine reamer having a shank-like main body (10) and having a reaming head which protrudes axially beyond the main body at the front side and which is formed as a unipartite interchangeable cutting insert (12) which can be clamped in a self-centring fashion in a front-side insert seat (14) of the main body, **characterized in that** the interchangeable cutting insert (12) has a projection (24) which protrudes axially beyond a rear planar surface (22) and which has at least three wedge surfaces (26) which are arranged at preferably uniform angular intervals from one another and which together form an axially central truncated pyramid, and **in that** the insert seat (14) has at least three oblique surfaces (28) which are arranged at preferably uniform angular intervals from one another and which are complementary to the wedge surfaces (26) of the truncated pyramid on the insert and which are delimited by a front-side planar surface (30) against which the rear planar surface (22) of the interchangeable cutting insert (12) abuts axially in the preloaded state.

2. Machine reamer according to Claim 1, **characterized in that** the insert seat (14) has at least three clamping lugs (32) which are arranged at preferably uniform angular intervals from one another and which are separated from one another by axially and/or radially open parting gaps (34) and which have in each case one of the oblique surfaces (28) and the front surfaces of which together span a plane which forms the front-side planar surface (30).

3. Machine reamer according to Claim 2, **characterized in that** the clamping lugs (32) can be spread apart elastically with respect to the main body axis under the action of the preload.

4. Machine reamer according to one of Claims 1 to 3, **characterized in that** the main body (10) has, in the interior of the insert seat (14), at least three expansion slots (36) which are arranged at preferably uniform angular intervals from one another and which are open axially and/or radially towards the front side.

5. Machine reamer according to Claim 4, **characterized in that** the expansion slots (36) are arranged in the root region of the respective clamping lugs (32).

6. Machine reamer according to one of Claims 1 to 5, **characterized in that** the angle of inclination of the wedge surfaces (26) with respect to the main body axis is 5° to 10°.

7. Machine reamer according to one of Claims 1 to 6, **characterized in that** the angle of inclination of the oblique surfaces (28) on the main body is smaller than that of the wedge surfaces (26) on the insert.

8. Machine reamer according to one of Claims 1 to 6, **characterized in that** the angles of inclination of the oblique surfaces (28) on the main body and of the wedge surfaces (26) on the insert are equal and **in that** the planar surfaces (22, 30) on the main body and on the insert are at a defined distance from one another when the connecting partners are in the joined position without preload.

9. Machine reamer having a shank-like main body (10) and having a reaming head which protrudes axially beyond the main body at the front side and which is formed as a unipartite interchangeable cutting insert (12) which can be clamped in a self-centring fashion in a front-side insert seat (14) of the main body, **characterized in that** the self-centring insert seat (14) has an internal cone (60), which is arranged in the main body and which is delimited to the outside by a front-side planar surface (30), and an internal polygon (62) which is arranged between the internal cone and the front-side planar surface (30), **in that** the interchangeable cutting insert (12) has a rearwardly coaxially protruding external cone, which is delimited by an annular planar surface and which can be plugged into the internal cone (60), and an external polygon which is formed between the external cone and the rear planar surface and which is complementary to the internal polygon (62), and **in that** the interchangeable cutting insert (12) abuts axially with its annular planar surface (22) against the front-side planar surface (30) of the main body (10) in the preloaded state.

10. Machine reamer according to Claim 9, **characterized in that** the insert seat (14) has at least two clamping lugs (32) which are arranged at preferably uniform angular intervals from one another and which are separated from one another by axially and/or radially open parting gaps (34) arranged in the corner region of the internal polygon (62) and the front surfaces of which together delimit a plane forming the front-side planar surface (30) and which can be spread apart elastically with respect to the main body axis under the action of the preload.

11. Machine reamer having a shank-like main body (10) and having a reaming head which protrudes axially beyond the main body at the front side and which is formed as a unipartite interchangeable cutting insert (12) which can be clamped in a self-centring fashion in a front-side insert seat (14) of the main body, **characterized in that** the self-centring insert seat (14) has a fitting cylinder (64), which is arranged in the main body (10) and which is delimited to the outside by a front-side planar surface (30), and an internal polygon (32) which is arranged between the fitting cylinder (64) and the front-side planar surface (30), **in that** the interchangeable cutting insert (12) has a cylindrical fitting peg, which protrudes beyond a rear planar surface and which can be inserted into the fitting cylinder (64) and which is overdimensioned with respect to the fitting cylinder, and an external polygon which is formed between the fitting peg and the annular planar surface and which is complementary to the internal polygon (62), and **in that** the interchangeable cutting insert (12) abuts with its rear planar surface axially against the front-side planar surface (30) of the main body (10) in the preloaded state.

12. Machine reamer according to Claim 11, **characterized in that** an insertion cone (60) which issues into the fitting cylinder is arranged in the insert seat (14) between the fitting cylinder (64) and the internal polygon (62).

13. Machine reamer according to Claim 11 or 12, **characterized in that** the interchangeable cutting insert (12) has an insertion cone arranged in the vicinity of the front-side end of its fitting peg.

14. Machine reamer according to one of Claims 1 to 13, **characterized in that** the interchangeable cutting insert (12) has a plurality of cutting teeth (16) arranged spaced apart from one another.

15. Machine reamer according to Claim 14, **characterized in that** the interchangeable cutting insert with multiple cutting edges has a nonuniform tooth pitch.

16. Machine reamer according to one of Claims 1 to 15, **characterized in that** the interchangeable cutting insert (12) can be clamped on the front side into the insert seat (14) by means of an axially central head screw.

17. Machine reamer according to one of Claims 1 to 15, **characterized in that** the interchangeable cutting insert (12) can be clamped in the insert seat (14) by means of a clamping pin (44) which extends axially centrally through the main body (10).

18. Machine reamer according to Claim 17, **characterized in that** the clamping pin (44) has an axial bore (54) which can be charged with cooling lubricant.

19. Machine reamer according to one of Claims 1 to 18, **characterized in that** the interchangeable cutting insert (12) is composed of a hard, preferably sintered cutting material and if appropriate has a friction-reducing coating.

20. Machine reamer according to Claim 19, **characterized in that** the interchangeable cutting insert (12) is composed of a cutting material from the group comprising HSS, hard metal, CBN, PCD and ceramic.

21. Machine reamer according to one of Claims 9 to 20, **characterized in that** the internal polygon is in the form of an internal hexagon and the external polygon is in the form of an external hexagon.

22. Machine reamer according to one of Claims 17 to 21, **characterized in that** the clamping pin has a head (46) which bears against an end surface of the interchangeable cutting insert (12).

23. Machine reamer according to Claim 22, **characterized in that** the clamping pin (44) has, at its end facing away from the head (46), an external thread (48) onto which can be screwed a clamping nut (50) which can be tightened against the rear end of the main body (10).

24. Machine reamer according to one of Claims 18 to 23, **characterized in that** the axial bore (54) issues, in the region of the clamping pin head (46), into radial ducts (56) which lead to the cutting edges (16).

25. Machine reamer according to either of Claims 23 and 24, **characterized in that** the clamping nut (50) has an axial bore (54) which communicates with the axial bore (54) of the clamping pin.

26. Reaming head for a machine reamer, which reaming head is formed as a unipartite interchangeable cutting insert (12), **characterized in that** the interchangeable cutting insert has a projection (24) which protrudes axially beyond a rear planar surface (22) and which has at least three wedge surfaces (26) arranged at uniform angular intervals from one another, the planes of which wedge surfaces together form an axially central, preferably equilateral pyramid.

27. Reaming head for a machine reamer, which reaming head is formed as a unipartite interchangeable cutting insert (12), **characterized in that** the interchangeable cutting insert has a projection (24) which protrudes axially beyond a rear planar surface (22) and which has an external cone and an external polygon arranged between the external cone and the planar surface (22).

28. Reaming head for a machine reamer, which reaming head is in the form of a unipartite interchangeable cutting insert (12), **characterized in that** the interchangeable cutting insert has a projection (24) which protrudes axially beyond a rear planar surface (22), which projection has an insertion cone which merges into the cylindrical fitting portion, and which projection has a cylindrical fitting portion and an external hexagon arranged between the fitting portion and the planar surface (22).

29. Reaming head according to either of Claims 27 and 28, **characterized in that** the external polygon is in the form of an external hexagon.

30. Reaming head according to one of Claims 26 to 29, **characterized in that** it is composed of a hard, preferably sintered cutting material.

31. Reaming head according to Claim 30, **characterized in that** the interchangeable cutting insert (12) is composed of a cutting material from the group comprising HSS, hard metal, CBN, PCD and ceramic.

32. Reaming head according to Claims 26 to 31, **characterized in that** the interchangeable cutting insert (12) has multiple cutting edges.

33. Reaming head according to one of Claims 26 to 32, **characterized in that** the interchangeable cutting insert has a cylindrical, spherical or conical guide portion (20) which axially adjoins a lead portion (18) and which is shorter than half of the insert diameter.

34. Reaming head according to one of Claims 26 to 33, **characterized in that** the interchangeable cutting insert has a central through bore (42).

## Revendications

1. Alésoir à machine avec un corps de base (10) en forme de tige et une tête d'alésage axialement saillante sur le corps de base côté frontal, qui est réalisée sous la forme d'une plaquette de coupe amovible en une seule pièce (12), qui peut être serrée avec auto-centrage dans un siège de plaquette frontal (14) du corps de base, **caractérisé en ce que** la plaquette de coupe amovible (12) présente une protubérance (24) en saillie axiale au-dessus d'une face plane arrière (22), laquelle présente au moins trois faces de coin (26) disposées à des distances angulaires de préférence égales l'une de l'autre et se complétant en un tronc de pyramide centré sur l'axe, et **en ce que** le siège de plaquette (14) présente au moins trois faces obliques (28) disposées à des distances angulaires de préférence égales l'une de l'autre et complémentaires aux faces de coin (26) du tronc de pyramide côté plaquette, lesquelles sont limitées par une face plane frontale (30) qui vient buter axialement, à l'état précontraint, contre la face plane arrière (22) de la plaquette de coupe amovible (12).

2. Alésoir à machine selon la revendication 1, **caractérisé en ce que** le siège de plaquette (14) présente au moins trois dents de serrage (32) disposées à des distances angulaires de préférence égales l'une de l'autre, séparées l'une de l'autre par des fentes de séparation ouvertes axialement et/ou radialement (34), et présentant chacune une des faces obliques (28), dont les faces frontales génèrent ensemble un plan formant la face plane frontale (30).

3. Alésoir à machine selon la revendication 2, **caractérisé en ce que** les dents de serrage (32) peuvent s'écarter élastiquement par rapport à l'axe du corps de base sous l'action de la précontrainte.

4. Alésoir à machine selon l'une quelconque des revendications 1 à 3, **caractérisé en ce que** le corps de base (10) présente, à l'intérieur du siège de plaquette (14), au moins trois fentes de dilatation (36) disposées à des distances angulaires de préférence égales l'une de l'autre et ouvertes axialement et/ou radialement en direction de la face frontale.

5. Alésoir à machine selon la revendication 4, **caractérisé en ce que** les fentes de dilatation (36) sont disposées dans la région de la racine des dents de serrage respectives (32).

6. Alésoir à machine selon l'une quelconque des revendications 1 à 5, **caractérisé en ce que** l'angle d'inclinaison des faces de coin (26) par rapport à l'axe du corps de base vaut 5° à 10°.

7. Alésoir à machine selon l'une quelconque des revendications 1 à 6, **caractérisé en ce que** l'angle d'inclinaison des faces obliques (28) côté corps de base est plus petit que celui des faces de coin (26) côté plaquette.

8. Alésoir à machine selon l'une quelconque des revendications 1 à 6, **caractérisé en ce que** les angles d'inclinaison des faces obliques (28) côté corps de base et des faces de coin (26) côté plaquette sont égaux et **en ce que** les faces planes (22, 30) côté corps de base et côté plaquette présentent, dans la position assemblée des partenaires d'assemblage sans précontrainte, une distance définie l'une par rapport à l'autre.

9. Alésoir à machine avec un corps de base (10) en forme de tige et une tête d'alésage axialement saillante sur le corps de base côté frontal, qui est réalisée sous la forme d'une plaquette de coupe amovible en une seule pièce (12), qui peut être serrée avec auto-centrage dans un siège de plaquette frontal (14) du corps de base, **caractérisé en ce que** le siège de plaquette à auto-centrage (14) présente un cône intérieur (60) disposé dans le corps de base et limité vers l'extérieur par une face plane côté frontal (30) et un polygone intérieur (62) disposé entre le cône intérieur et la face plane côté frontal (30), **en ce que** la plaquette de coupe amovible (12) présente un cône extérieur en saillie coaxiale vers l'arrière, limité par une face plane annulaire et insérable dans le cône intérieur (60) ainsi qu'un polygone extérieur complémentaire au polygone intérieur (62), formé entre le cône extérieur et la face plane arrière, et **en ce que** la plaquette de coupe amovible (12) vient buter axialement avec sa face plane annulaire (22), à l'état précontraint, contre la face plane frontale (30) du corps de base (10).

10. Alésoir à machine selon la revendication 9, **caractérisé en ce que** le siège de plaquette (14) présente au moins deux dents de serrage (32) disposées à des distances angulaires de préférence égales l'une de l'autre, séparées l'une de l'autre par des fentes de séparation (34) disposées dans la région des angles du polygone intérieur (62) et ouvertes axialement et/ou radialement, dont les faces frontales limitent ensemble un plan formant la face plane frontale (30) et qui peuvent s'écarter élastiquement par rapport à l'axe du corps de base sous l'action de la précontrainte.

11. Alésoir à machine avec un corps de base (10) en forme de tige et une tête d'alésage axialement saillante sur le corps de base côté frontal, qui est réalisée sous la forme d'une plaquette de coupe amovible en une seule pièce (12), qui peut être serrée avec auto-centrage dans un siège de plaquette frontal (14) du corps de base, **caractérisé en ce que** le siège de plaquette à auto-centrage (14) présente un cylindre d'ajustement (64) disposé dans le corps de base (10) et limité vers l'extérieur par une face plane frontale (30) et un polygone intérieur (32) disposé entre le cylindre d'ajustement (64) et la face plane frontale (30), **en ce que** la plaquette de coupe amovible (12) présente un pivot d'ajustement cylindrique en saillie au-dessus d'une face plane arrière, insérable dans le cylindre d'ajustement (64) et surdimensionné par rapport au cylindre d'ajustement, ainsi qu'un polygone extérieur complémentaire au polygone intérieur (62) et formé entre le pivot d'ajustement et une face plane annulaire, et **en ce que** la plaquette de coupe amovible (12) vient buter axialement avec sa face plane arrière, à l'état précontraint, contre la face plane frontale (30) du corps de base (10).

12. Alésoir à machine selon la revendication 11, **caractérisé en ce qu'**un cône d'insertion (60) débouchant dans le cylindre d'ajustement est disposé dans le siège de plaquette (14) entre le cylindre d'ajustement (64) et le polygone intérieur (62).

13. Alésoir à machine selon la revendication 11 ou 12, **caractérisé en ce que** la plaquette de coupe amovible (12) présente un cône d'insertion disposé à proximité de l'extrémité frontale de son pivot d'ajustement.

14. Alésoir à machine selon l'une quelconque des revendications 1 à 13, **caractérisé en ce que** la plaquette de coupe amovible (12) présente plusieurs dents de coupe (16) disposées à distance l'une de l'autre.

15. Alésoir à machine selon la revendication 14, **caractérisé en ce que** la plaquette de coupe amovible à plusieurs tranchants présente un pas de dents inégal.

16. Alésoir à machine selon l'une quelconque des revendications 1 à 15, **caractérisé en ce que** la plaquette de coupe amovible (12) peut être serrée frontalement dans le siège de plaquette (14) au moyen d'une tête de vis centrale sur l'axe.

17. Alésoir à machine selon l'une quelconque des revendications 1 à 15, **caractérisé en ce que** la plaquette de coupe amovible (12) peut être serrée dans le siège de plaquette (14) au moyen d'une tige de serrage (44) s'accrochant par l'arrière en position centrale sur l'axe à travers le corps de base (10).

18. Alésoir à machine selon la revendication 17, **caractérisé en ce que** la tige de serrage (44) présente un alésage axial (54) pouvant être alimenté en lubrifiant de refroidissement.

19. Alésoir à machine selon l'une quelconque des revendications 1 à 18, **caractérisé en ce que** la plaquette de coupe amovible (12) se compose d'un matériau de coupe dur, de préférence fritté, et est éventuellement revêtue de façon à réduire le frottement.

20. Alésoir à machine selon la revendication 19, **caractérisé en ce que** la plaquette de coupe amovible (12) se compose d'un matériau de coupe du groupe HSS, métal dur, CBN, PKD et céramique.

21. Alésoir à machine selon l'une quelconque des revendications 9 à 20, **caractérisé en ce que** le polygone intérieur est un hexagone intérieur et le polygone extérieur est un hexagone extérieur.

22. Alésoir à machine selon l'une quelconque des revendications 17 à 21, **caractérisé en ce que** la tige de serrage présente une tête (46) appliquée contre une face frontale de la plaquette de coupe amovible (12).

23. Alésoir à machine selon la revendication 22, **caractérisé en ce que** la tige de serrage (44) présente à son extrémité éloignée de la tête (46) un filet (48), sur lequel un écrou de serrage (50) à serrer contre l'extrémité arrière du corps de base (10) peut être vissé.

24. Alésoir à machine selon l'une quelconque des revendications 18 à 23, **caractérisé en ce que** l'alésage axial (54) débouche dans la région de la tête de la tige de serrage (46) dans des canaux radiaux (56) menant aux tranchants (16).

25. Alésoir à machine selon l'une quelconque des revendications 23 ou 24, **caractérisé en ce que** l'écrou de serrage (50) présente un alésage axial (54) communiquant avec l'alésage axial (54) de la tige de serrage.

26. Tête d'alésage pour un alésoir à machine, qui est réalisée sous la forme d'une plaquette de coupe amovible en une seule pièce (12), **caractérisée en ce que** la plaquette de coupe amovible présente une protubérance (24) en saillie axiale au-dessus d'une face plane arrière (22), laquelle présente au moins trois faces de coin (26) disposées à des distances de préférence égales l'une de l'autre, dont les plans se complètent en une pyramide centrée sur l'axe, de préférence équilatérale.

27. Tête d'alésage pour un alésoir à machine, qui est réalisée sous la forme d'une plaquette de coupe amovible en une seule pièce (12), **caractérisée en ce que** la plaquette de coupe amovible présente une protubérance (24) en saillie axiale au-dessus d'une face plane arrière (22), laquelle présente un cône extérieur et un polygone extérieur disposé entre le cône extérieur et la face plane (22).

28. Tête d'alésage pour un alésoir à machine, qui est réalisée sous la forme d'une plaquette de coupe amovible en une seule pièce (12), **caractérisée en ce que** la plaquette de coupe amovible présente une protubérance (24) en saillie axiale au-dessus d'une face plane arrière (22), laquelle présente un cône d'insertion se prolongeant dans la partie d'ajustement cylindrique et qui présente une partie d'ajustement cylindrique et un polygone extérieur disposé entre la partie d'ajustement et la face plane (22).

29. Tête d'alésage selon l'une quelconque des revendications 27 ou 28, **caractérisée en ce que** le polygone extérieur est un hexagone extérieur.

30. Tête d'alésage selon l'une quelconque des revendications 26 à 29, **caractérisée en ce qu'**elle se compose d'un matériau de coupe dur, de préférence fritté.

31. Tête d'alésage selon la revendication 30, **caractérisée en ce que** la plaquette de coupe amovible (12) se compose d'un matériau de coupe du groupe HSS, métal dur, CBN, PKD et céramique.

32. Tête d'alésage selon l'une quelconque des revendications 26 à 31, **caractérisée en ce que** la plaquette de coupe amovible (12) comporte plusieurs tranchants.

33. Tête d'alésage selon l'une quelconque des revendications 26 à 32, **caractérisée en ce que** la plaquette de coupe amovible présente une partie de guidage (20) cylindrique, sphérique ou conique, se raccordant à une partie d'attaque (18), et qui est plus courte que la moitié du diamètre de la plaquette.

34. Tête d'alésage selon l'une quelconque des revendications 26 à 33, **caractérisée en ce que** la plaquette de coupe amovible présente un alésage traversant central (42).
